# EUROPEAN PATENT APPLICATION

(11) **EP 4 786 249 A2**
(43) Date of publication of application: **05.08.2026**
(21) Application number: 26155264.0
(22) Date of filing: 30.01.2026
(51) Int. Cl.: B60L 13/03, B60L 15/00, B60L 15/38, G05B 19/19, G05B 19/418, B65G 15/22, B65G 43/00

(54) **LINEAR MOTOR CONVEYOR SYSTEM WITH HYBRID CONTROL**

(30) Priority: 30.01.2025 US 202563751519 P
(71) Applicant: ATS Corporation, Cambridge, Ontario N3H 4R7 (CA)
(72) Inventor: KNAP, Graham Richard, Cambridge, ON N3H 4R7 (CA); KLEINIKKINK, Albert John, Cambridge, ON N3H 4R7 (CA)
(74) Representative: Noble, Nicholas

(57) **Abstract**

A linear motor conveyor system (100) uses a central controller (108) to determine trajectories (114a, 114b) of shuttles (106a, 106b) traveling on a conveyor track (102). The trajectories are provided to respective controllers in each section (104a, ..., 104h) of the conveyor track in order to determine and control the coil currents used to move the shuttles. A time synchronization process is used to ensure tight temporal synchronization across the different track sections

## Description

### RELATED APPLICATIONS

The current application claims priority to US Provisional Application No. 63/750,519 filed January 30, 2025 and titled "Linear Motor Conveyor System With Hybrid Control."

### TECHNICAL FIELD

The current disclosure relates to linear motor conveyor systems and in particular to linear motor conveyor systems using a hybrid control architecture.

### BACKGROUND

Linear motor conveyors can be used in a wide variety of applications, including for example in automated or semi-automated manufacturing, assembly and/or packaging applications. Linear motor conveyors use linear motors, comprising a plurality of motor coils arranged along a track, to move shuttles on the track. The shuttles can carry components, parts, tools, etc. through different processing stations. A central controller is used to control the motion of the shuttles moving on the track. A communication network is used to communicate the shuttle control information from the central controller to electronics in the track in order to control the linear motor coils in a manner that provides the desired motion to the shuttles.

The use of the central controller to directly control all of the shuttles can be a bottleneck on performance as the number of shuttles present on the track increases. Further, as the number of shuttles, the number of coils, and positioning sensors increases, the central controller can further limit the scalability of the conveyor system as the communication bandwidth requirements between the track electronics and the central controller can become greater than the network capacity.

An architecture in which a central controller performs a portion of the control and distributed controllers can perform the remainder of the shuttle control can reduce the processing bottleneck associated with a single central controller; however, it can increase the network complexity required to connect the central controller to the distributed controllers.

In an attempt to reduce the network communication bottleneck, multiple different wired networks have been used. While the use of multiple networks can help reduce the network bottlenecks, it can further increase the network complexity required to connect the central controller to the distributed controllers.

An additional, alternative, and/or improved linear motor conveyor with a hybrid control architecture is desirable.

### BRIEF DESCRIPTION OF THE DRAWINGS

Further features and advantages of the present disclosure will become apparent from the following detailed description, taken in combination with the appended drawings, in which:
FIG. 1 depicts a linear motor conveyor system with hybrid control architecture;
FIG. 2 depicts an illustrative shuttle trajectory for a particular shuttle;
FIG. 3 depicts details of the hybrid control architecture;
FIG. 4 depicts details of network control functionality;
FIG. 5 depicts a time synchronization process;
FIG. 6 depicts a method of controlling shuttles using the hybrid control architecture;
FIG. 7 depicts details of a further track section controller;
FIG. 8 depicts the shuttle control process performed by the hybrid control architecture;
FIG. 9 depicts cross-section control of a shuttle; and
FIG. 10 depicts a method of cross-section control of a shuttle.

### DETAILED DESCRIPTION

In accordance with the present disclosure there is provided a linear motor conveyor system comprising: a plurality of shuttles; a track on which the plurality of shuttles move, the track comprising a plurality of connected track sections, each track section comprising: a plurality of linear motor coils; a plurality of coil drivers, each of the coil drivers driving one or more respective coils of the plurality of linear motor coils; a plurality of position sensors for determining respective positions of shuttles on the respective track section; first and second network communication interfaces; and a section gateway controller configured to: receive shuttle trajectories over the first communication interface and transmit shuttle trajectories over the second communication interface; and controlling one or more coil drivers to achieve the shuttle trajectories; and a central controller communicatively coupled to a first network communication interface of one of the section gateway controllers (the first section gateway controller), the central controller configured to: determine shuttle trajectories of the plurality of shuttles; and transmit the determined shuttle trajectories to the first network communication interface of the first section gateway controller.

In a further embodiment of the conveyor system the central controller is further configured to transmit a time synchronization signal to the first network communication interface of the first section gateway controller.

In a further embodiment of the conveyor system each of the section gateway controllers are further configured to: receive a time synchronization signal over the first communication interface; synchronize an internal clock to the received time synchronization signal; adjust the time synchronization signal; and transmit the adjusted time synchronization signal over the second communication interface.

In a further embodiment of the conveyor system adjusting the time synchronization signal comprises: estimating a length of time between receiving the time synchronization signal and transmitting the adjusted time synchronization signal; and adjusting the received time synchronization signal to account for the estimated length of time.

In a further embodiment of the conveyor system estimating the length of time further comprises: determining a message queue length; and accounting for an additional length of time the time synchronization message or the adjusted time synchronization message spends in the message queue based on the message queue length.

In a further embodiment of the conveyor system each section gateway controller is further configured to: provide a position control loop for each shuttle travelling on the respective section, the position control loop continually determining current set points for coils to match shuttle position to the shuttle trajectory.

In a further embodiment of the conveyor system each section gateway controller is further configured to: transmit the current set points of coils to the respective coil drivers, and wherein each of the coil drivers comprises a current control loop for each coil associated with the coil driver, the current control loop matching the actual coil current of each coil to the current set point.

In a further embodiment of the conveyor system the shuttle trajectory information defines a motion profile of a respective shuttle over a period of time.

In a further embodiment of the conveyor system the shuttle trajectory information for a respective shuttle identifies a specific section gateway controller responsible for determining position information of the respective shuttle.

In a further embodiment of the conveyor system each of the section gateway controllers are configured to identify if the respective section gateway controller is responsible for determining position information of a respective shuttle associated with received shuttle trajectory information.

In a further embodiment of the conveyor system the section gateway controller responsible for determining position information of a shuttle travelling over two adjacent track sections controls one or more coil drivers of the adjacent track section.

In a further embodiment of the conveyor system each of the section gateway controllers are further configured to: transmit coil current set points to a section gateway controller of a first adjacent track section; receive coil current set points from a section gateway controller of a second adjacent track section; and control coil current according to the received coil current set points.

In a further embodiment of the conveyor system each of the section gateway controllers are further configured to: transmit positioning information to a section gateway controller of a first adjacent track section; receive positioning information from a section gateway controller of a second adjacent track section; and determine coil current set points based on the received positioning information; and control coil current according to the determined coil current set points.

In a further embodiment of the conveyor system the first and second network communication interfaces comprise optical network communication interfaces providing an optical network.

In a further embodiment of the conveyor system the optical network carries messages of different priorities.

In a further embodiment of the conveyor system messages carrying shuttle trajectories and time synchronization signals are a highest priority.

In a further embodiment of the conveyor system the messages further include: status information; sensor data; and shuttle position data.

In a further embodiment of the conveyor system the optical network carries messages of different priorities, wherein messages carrying shuttle trajectories and time synchronization signals are a highest priority and wherein the messages further include one or more of: status information; sensor data; and shuttle position data

A linear motor conveyor system uses a hybrid control architecture in which a central controller determines trajectory information for each shuttle on the track, and then distributed controllers in each section of track determine the coil currents to move the shuttles into the determined positions. The coils are controlled to provide the determined current to the coils resulting in the movement of the shuttles in a manner that matches the trajectories determined by the central controller.

The central controller determines the trajectories of all of the shuttles on the track. Determining the shuttle trajectories by the central controller allows all shuttle positions to be considered at the same time to ensure that the shuttle trajectories do not result in collisions or other violations of operating parameters, such as safe following distances. While the trajectories are determined at the central location, other details required for controlling shuttles according to the trajectories are determined by the distributed controllers, which reduces the computational burden on the central processor. The shuttle trajectories are periodically sent to the distributed controllers, which are able to independently control the shuttles for the duration of the received trajectory. If there are any transient network errors, the distributed controllers can continue operating independently to control the shuttles according to the last trajectory. It will be appreciated that the duration of transient network errors is expected to be shorter than the period at which shuttle trajectories are transmitted to the distributed controllers.

The linear motor conveyor system may provide communication link between adjacent sections. Communication can be passed from one section to the next, with the central controller in communication with one of the track sections. The communication network between the distributed controllers, as well as with the central controller, can be provided by one or more networks providing two-way communication. The networks may be provided by optical connections or other network technologies. The distributed controllers should be tightly temporally synchronized in order to ensure that the shuttles can be controlled precisely across different sections. The central controller can provide a synchronization signal that allows all of the distributed controllers to synchronize their respective clocks. However, as the number of track sections increase, different track sections may receive the synchronization message at different times which makes the synchronization less precise. In order to more tightly synchronize the distributed controllers, each distributed controller can adjust the synchronization signal it receives in order to adjust the signal to account for delays between receiving the synchronization signal and transmitting it to the adjacent distributed controller.

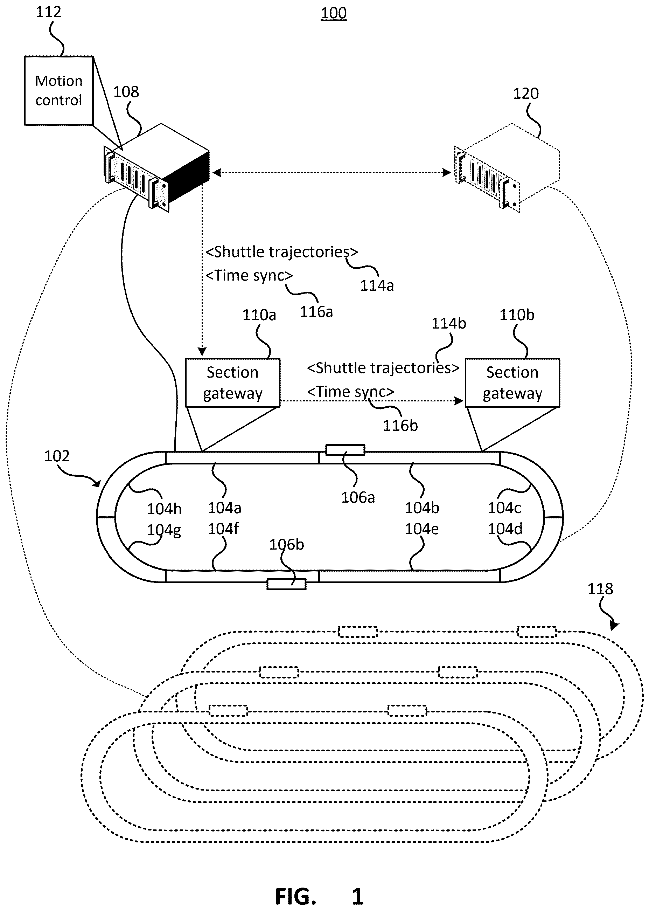

FIG. 1 depicts a linear motor conveyor system with distributed control architecture. The system 100 includes a linear motor conveyor track 102 that comprises a plurality of track sections 104a..104h (referred to collectively as track sections 104) that are connected together. The track sections 104 are depicted as forming a loop with a number of straight track sections 104a, 104b, 104e, 104f and curved sections 104c, 104d, 104g, 104h. It will be appreciated that the track can have different shapes than a simple loop. Further, the track may be closed or open-ended. While it is possible to use a single track section, when two or more track sections are used the central controller can coordinate shuttle control between the individual track section gateways. For example, as depicted in FIG. 1 track section 104a may provide a first adjacent track section and track section 104b may provide a second adjacent track section.

A plurality of shuttles 106a, 106b (referred to collectively as shuttles 106) move around the track. The shuttles 106 can carry different elements such as parts, components, tooling, etc. along the track. Although not depicted in FIG. 1, the system 100 may include a plurality of processing stations arranged along the track 102. The processing stations may carry out one or more actions such as picking and placing a component, assembling components, etc.

Each of the track sections 104 includes a plurality of electrical coils arranged along the track. Controlling the current flowing through the individual coils causes a magnetic field to be generated which interacts with a magnet or magnetic array on the shuttles in order to controllably move the shuttles along the track. Although not depicted in FIG. 1, each of the track sections includes a number of positioning sensors arranged along each track section. The number of positioning sensors and their respective precision in determining a shuttles position along the track may vary, however the positioning information of each shuttle is used to control the movement of the shuttles. Further, the track 102 may include functionality for identifying individual shuttles on the track. For example, each shuttle may have a unique identifier that can be identified or read by one or more ID sensors on the track section. The IDs may be provided using optical encodings that can be read by optical sensors, magnetic encodings that can be read by magnetic sensors or other types of encodings and readers. Further, the shuttle IDs may be encoded in a RFID tag and read by an appropriate RFID reader.

As depicted in FIG. 1 a central controller 108, depicted as a server, is communicatively coupled to one of the track sections 104a, or more particularly to a section gateway 110a of the track section. The central controller provides motion control functionality 112 that determines the motion of the various shuttles 106 on the track 102. As described in further detail below, the motion control functionality repeatedly determines the trajectories of the individual shuttles. The trajectories can be determined for a specific period of time, or may determine the trajectory for moving the shuttle from one location to another. For example, the trajectory may be associated with accelerating a shuttle up to a maximum velocity, holding the velocity constant and then decelerating the shuttle to stop at a precise location.

The motion control can account for a number of operating parameters or characteristics when determining the shuttle trajectories. For example, the motion control functionality may ensure that shuttles maintain a safe or minimum distance between shuttles. The minimum distance may vary for example, during accelerating or decelerating, the safe distance may be increased while at rest or at low speeds, the safe distance may be reduced. Further characteristics that may be considered by the motion control functionality when determining shuttle trajectories may include, for example, maximum acceleration/deceleration rates, and maximum velocities. The actual acceleration of a shuttle may depend upon the payload, which the controller may or may not have information about such as its weight. The controller may calculate estimates of the payload based on the motive forces applied to the shuttle as determined by the current passing through the coils and the measured accelerations based on sensor data. Additionally or alternatively the motion control functionality may use position feedback information to ensure the actual acceleration, velocity and/or position match the target values. Further, the motion control functionality may also consider the operation of external components when determining the shuttle trajectories, which can allow the movement of shuttles to be synchronized to other components.

The central controller 108 transmits the determined shuttle trajectories 114a to a track section gateway 110a. Each of the shuttle trajectories may be associated with a particular shuttle. The association between a shuttle trajectory and a specific shuttle can be provided in various ways. For example, the shuttle trajectory may be associated with a unique shuttle ID. Additionally or alternatively the shuttle trajectory may be associated with a particular track section that the shuttle is travelling on. Additionally or alternatively, the shuttle trajectory may specify the initial location of the shuttle along the track, or along a track section which can be used to identify the particular shuttle. The central controller transmits the shuttle trajectories to the track section gateways in one or more messages. Each message may identify a particular track section gateway the message is intended for, and may include one or more shuttle trajectories controlled by the identified track section gateway. Each track section gateway may pass on messages identifying other track section gateways.

The shuttle trajectories may be communicated to the respective track section gateways in other ways besides identifying the intended track section gateway. For example, the track section gateway 110a may receive the shuttle trajectories and determines which shuttle trajectories are for shuttles currently on the current track section, or controlled by the current track section gateway 110a. The shuttle trajectories of the shuttles on the other track sections may be transmitted 114b from the current section gateway controller 110a to the adjacent section gateway controller 110b. The second section gateway controller 110b determines which of the received shuttle trajectories are for shuttles travelling on the current track section and again transmits the other shuttle trajectories to the next adjacent track section. It is noted that only two section gateways 110a, 110b of respective track sections 104a, 104b are depicted in FIG. 1; however, each of the track sections 104 includes a respective section gateway. Although the above has described the section gateways as transmitting only the shuttle trajectories of shuttles not on the current track section, the section gateways may transmit all of the received shuttle trajectories and the section gateways only pay attention to the shuttle trajectories of shuttles on the respective track section of the section gateway.

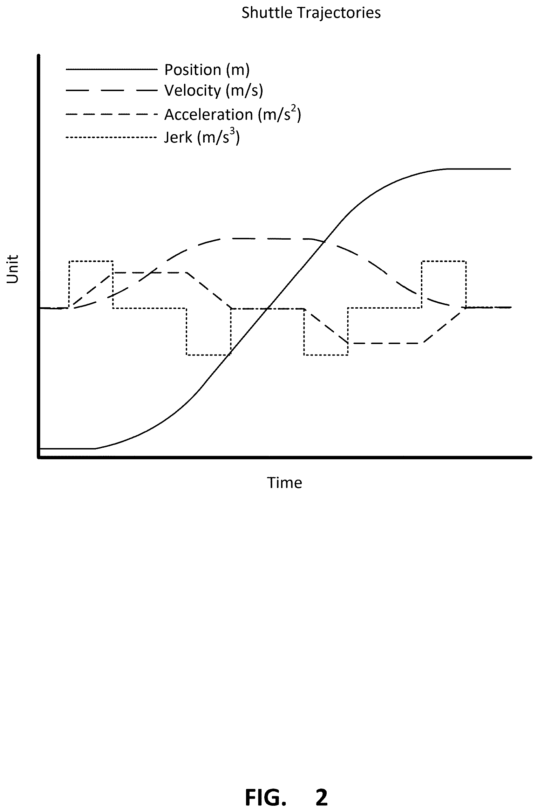

Each section gateway receives shuttle trajectories of shuttles and for shuttles that are on the track section of the respective section gateway, the section gateway determines the shuttle positioning information from the trajectory. The shuttle positioning information comprises information used to control the shuttle's position to match the trajectory. For example, the shuttle positioning information may comprise coil current setpoints that should be applied to coils in order to move the shuttle according to the trajectory. FIG. 2 depicts possible illustrative shuttle trajectories for a particular shuttle. As depicted, the shuttle trajectory may be expressed as one or more of shuttle position, velocity, acceleration and/or jerk vs. time. While the trajectories of shuttles may be determined relative to the positions of shuttles, the trajectories may be determined without having to determine the shuttle positions at every time instant. Further, transmitting the shuttle trajectories rather than each individual shuttle position at the different time instances can be more efficient with bandwidth. The shuttle trajectories in FIG. 2 depicts a trajectory in which the shuttle is accelerated from a stop, held at a constant velocity and then decelerated to a stop. Although depicted as a single trajectory, it is possible for the same shuttle path, namely acceleration, constant velocity, deceleration, could be specified by multiple shuttle trajectories. Each section gateway receives the shuttle trajectories and continually controls the position of the shuttle in order to match the shuttle's movement to the received trajectory. The particular coils and the associated coil currents required to move the shuttle to match the trajectory can be determined. Coil drivers can then be controlled in order to supply the determined current to the determined coils. The position of the shuttle can be tracked using the positioning sensors and the position used as feedback control coil currents. The position feedback may be used to calculate a position error, which may be the actual deviation from the desired shuttle position. The position feedback may be used to determine how much driving force should be applied to the shuttle, and so the coil currents. Generally, a larger position feedback error results in a larger driving force, in an effort to reduce the error.

The above has described the central controller as determining the shuttle trajectory which the distributed section gateways then use to determine the shuttle positions and associated coil currents. It is possible for the central controller to determine the shuttle locations at associated times and periodically transmit the shuttle locations, and times, to the section gateways, which then determine the coil currents.

As described above, the shuttle trajectories are determined by the central controller and then used by the respective section gateways to determine the coil currents to move the shuttle to the required positions at particular time instances. It is necessary, or at least desirable, for each section gateway to be synchronized with each other so that the control of shuttles is synchronized across different track sections. In order to make sure the section gateways are tightly synchronized temporally, the central controller periodically transmits a time sync signal 116a. The time sync signal is used by the section gateways in order to adjust their internal clocks to ensure they are all synchronized. In order to synchronize the different section gateways, the time sync signals need to be received at the respective gateways at substantially the same time. However, because the time sync signal is transmitted from the central controller and then sequentially through the adjacent section gateways, the time sync signal sent from the central controller will not be received at substantially the same time. The time sync signal received at each of the section gateways can be adjusted in order to account for the time difference of receiving the time sync signals between adjacent section gateways. The adjusted time sync signal can then be transmitted to the adjacent section gateway and used to synchronize the gateway's internal clock. By adjusting the time sync signal at each section gateway, it is possible to tightly synchronize the section gateways, even as the track length and the number of sections increases.

The above has described a single central controller 108 determining the shuttle trajectories for all the shuttles on a single track 102. As depicted, the central controller 108 may control shuttles moving on one or more additional tracks or track segments 118. Additionally, as depicted in FIG. 1, a track 102 may comprise a plurality of connected sections or regions with shuttles on each section or region being controlled by a respective central controller 108, 120. The central controllers 108, 120 may communicate with each other in order to synchronize the control of the shuttles as they move from one track region to another.

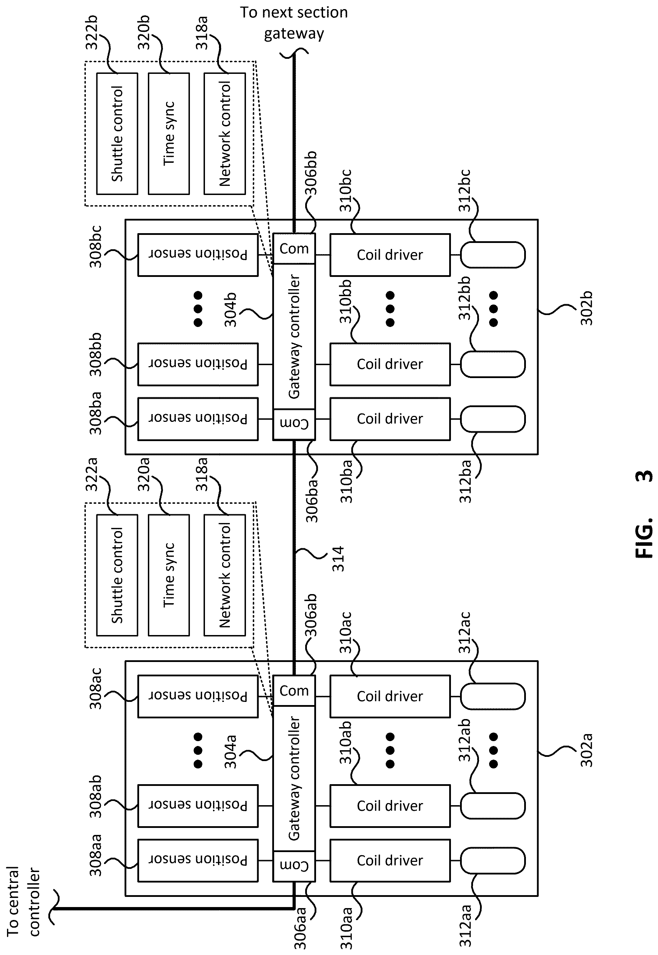

FIG. 3 depicts details of the distributed control architecture. FIG. 3 depicts two adjacent section gateways 302a, 302b (referred to collectively as section gateways 302). The first section gateway 302a is depicted as being communicatively coupled to a central controller. Each of the section gateways 302 provide the electronics for controlling the position of shuttles along each section of track. The components of the section gateways 302 depicted in FIG 3 may be arranged along or within each track section. Each section gateway 302 comprises a respective gateway controller 304a, 304b. The section gateways 302 also include a first communication interface 306aa, 306ba and a second communication interface 306ab, 306bb. As depicted, the first communication interface 306aa of the first section gateway 302a may be connected to the central controller. The second communication interface 306ab of the first section gateway 302a is connected to the first communication interface 306ba of the second section gateway 302b. The communication interfaces can be optical interfaces, or other interfaces that provide sufficient bandwidth, and the connection 314 between adjacent section gateways, and the section gateway and central controller, can be provided by one or more fiber optic cables, or other network cables. The communication interface may provide bi-directional communication. Alternatively, if the communication interfaces do not provide bi-directional communication, pairs of communication interfaces can be used to provide bi-direction communication between adjacent gateways, and the gateway and central controller.

Each of the section gateways 302 includes a plurality of position sensors 308aa..308bc (referred to collectively as position sensors 308). The position sensors 308 are spaced along the track and are used to determine the location of the shuttle. The number of position sensors, as well as the precision they are able to locate shuttles with, can vary. The section gateways 302 further include a number of coil drivers 310aa..310bc which are each associated with one or more coils. The coil drivers can receive instructions or commands from the gateway controller specifying how much current is to be supplied to the respective coil or coils controlled by the respective coil driver. Each coil driver is depicted as being associated with a respective coil 312aa..312bc (referred to collectively as coils 312), however the coil driver may be associated with two or more coils. The current applied to each of the coils 312 is able to be independently controlled. By controlling the current applied to the coils, it is possible to control the movement of the shuttles along the track.

As depicted, each of the section gateway controllers is configured, for example by executing instructions, to provide various functionality including network communication functionality 318a, 318b, time synchronization functionality 320a, 320b and shuttle control functionality 322a, 322b. While the functionality is depicted as being provided by the gateway controller, portions of the functionality may be provided by, for example, the communication interfaces and/or coil drivers.

The network control 318a, 318b controls the network communications between the different components, namely between adjacent track sections, and a track section and the central controller. The network control functionality prioritizes network traffic being sent and received. By prioritizing the different network traffic, it is possible to use a single physical network to carry all of the network traffic. The highest priority network traffic may be, for example, the trajectory information and the time synchronization signals. Other high priority network traffic may include, for example, emergency stop signals or other information that should be received as quickly as possible. Further, the network may carry additional information such as status information of different components, sensor data that has been collected but is not required for controlling the shuttles, etc. The time sync functionality 320a, 320b receives time sync signals, synchronizes an internal clock to the time sync signal and then adjusts the time sync signal in order to account for the time difference between receiving time sync signals at adjacent gateways. The shuttle control functionality 322a, 322b receives the trajectory information initially transmitted from the central controller and determines the coil current required to provide the shuttle trajectory. The shuttle control functionality may use the shuttle position information from position sensors as feedback for controlling the shuttle position.

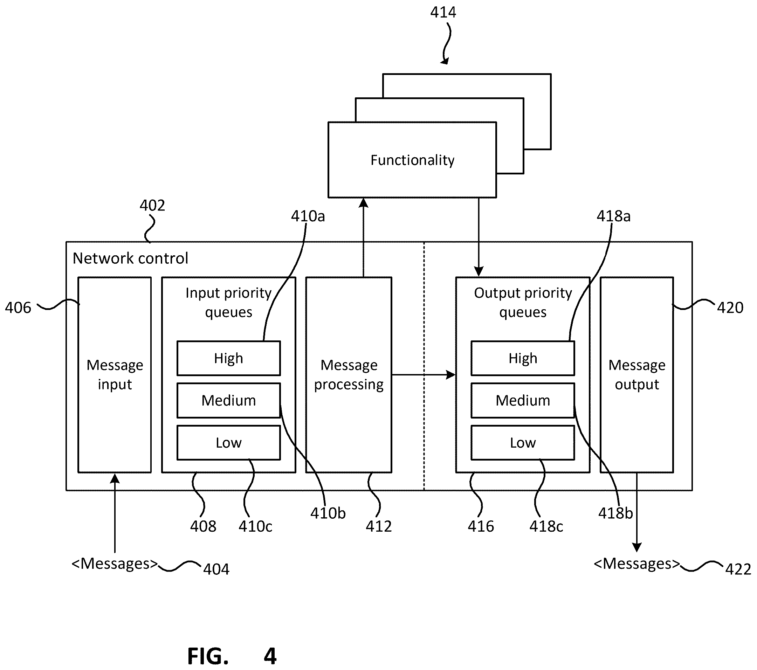

FIG. 4 depicts details of network control functionality. The network control functionality 402 receives network messages 404 at a message input 406. The message input functionality can determine the priority level, or importance, of the messages and provide the messages to input priority queues 408. The input priority queues are depicted as being a high priority queue 410a, a medium priority queue 410b, and a low priority queue 410c. The input priority queues are processed by message processing functionality 412. The message processing functionality can remove messages from the queues and determine where the message should be delivered to. For example, the message may be a time sync message in which case the message is passed to time sync functionality. The messages may be passed to other functionality 414, including for example shuttle control functionality. The message processing functionality may select next messages for processing according to the queues. For example, messages in the high priority queue are processed before any other messages. Further, the processing of a high priority message may interrupt the processing of lower priority messages. Assuming there are no high priority messages to process, messages in the other queues can be processed. Medium priority messages may be processed before the low priority messages; however the processing of medium priority messages may not interrupt the processing of low priority messages. It will be appreciated that more or fewer input priority queues may be provided. However, there should be at least two priority levels in order to ensure that the trajectory information and time sync messages are handled promptly.

The network control functionality 402 may further include output priority queues 416, which may be high 418a, medium 418b and low 418c. The output priority queues 416 can intake or receive messages from the message processing functionality 412 and/or the other functionality 414. The output priority queues 416 are processed by message output functionality 420 for transmitting messages 422 to the next adjacent section gateway, or the central controller. The message output functionality 420 may retrieve messages from the output priority queues based on the priority levels so that high priority messages are transmitted before medium priority messages, which are transmitted before low priority messages.

The network control 402 depicted in FIG. 4 may be used for one direction of communication. A similar structure may be used for controlling the reception and transmission of messages in the other direction.

The network control functionality ensures that time critical messages, such as the time sync messages and the shuttle trajectory, are processed promptly. The network control allows a single optical network to be used, although additional optical networks may be used, to carry all of the network communications, which can not only reduce the components required by the section gateway but also simplify the commissioning and maintenance of the conveyor as fewer networking cables need to be connected.

FIG. 4 describes the use of priority queues in order to ensure high priority messages, such as the time sync signals and shuttle trajectories, are handled in a timely manner. Similar functionality can be provided in various ways without using priority queues. For example, if the track section gateways include an FPGA and a multi-core CPU it is possible to process multiple messages concurrently. The track section gateway software may be arranged in multiple tasks, each having a respective priority level, running within a pre-emptive multitasking real-time operating system. Each incoming message can be assigned to a particular task for processing and so task priorities also determine message-processing priorities.

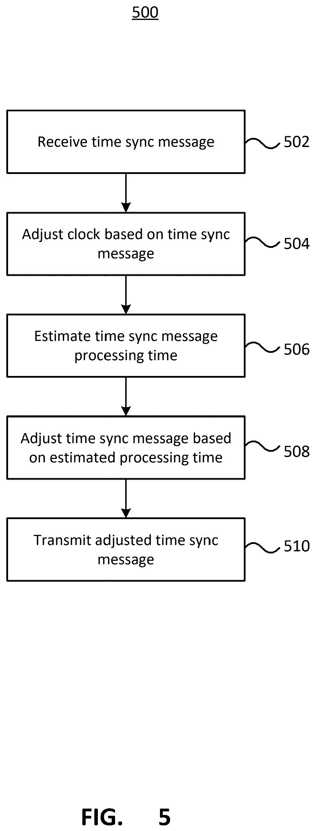

FIG. 5 depicts a time synchronization process. The method 500 may be used to tightly synchronize all of the distributed control components, possibly within nanoseconds of each other. The distributed control components include the central controller and the track section gateways. The method 500 may be performed by each of the section gateways and assumes that the initial time sync message is transmitted by the central controller. A time sync message is received (502) at the section gateway. The time sync messages are a high priority message and as such are processed promptly. The time sync message is used to adjust an internal clock based on the message (504). As an example, the time sync message may indicate that the time is 12:00 and so the internal clock is adjusted to 12:00. Once the internal clock is adjusted, the clocks of the current section gateway, and the internal clock of the component sending the time sync message will be tightly synchronized, possibly to within nanoseconds of each other. Once the internal clock is adjusted, the processing time of the time sync message is estimated (506). The processing time may be the time between when the time sync message is initially received and when it is transmitted to the next section gateway, or possibly received by the next section gateway. The processing time may be estimated using a fixed, pre-defined, parameter that gives the length of time. Assuming there are no other messages being processed or in the high priority queue when the time sync message is received, the processing time can be determined, either based on the architecture of the electronics and controller, or determined experimentally. In addition to the time for the time sync message to progress through the section gateway from being received and then transmitted, the processing time may also account for the number of messages in the high priority input queue and high priority output queue. The number of messages in each queue may further delay the transmission of the time sync signal to the next section gateway. Once the processing time is estimated, it is used to adjust the time sync message that was received (508). For example, if the received time sync message indicates 12:00.00 and the processing time is estimated at 1 second, the adjusted sync message indicates that the sync message was sent at 12:00.01. It is noted that the processing time of 1 second is only an example and the actual processing times are likely to be significantly shorter such as on the order of tens of nanoseconds. The adjusted time sync message is then transmitted to the next adjacent section gateway (510). The adjusted time sync message is received by the next section gateway and processed in the same manner.

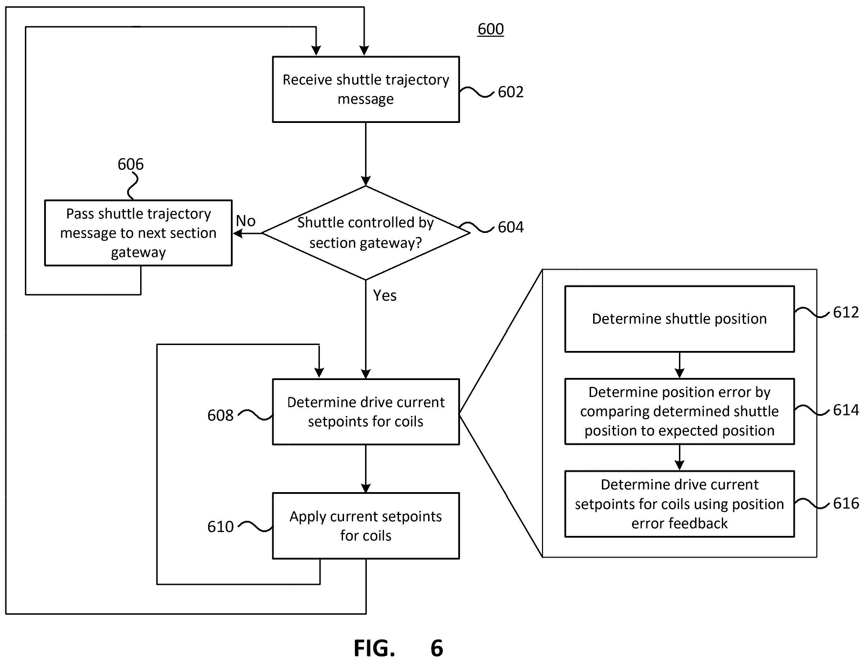

FIG. 6 depicts a method of controlling shuttles using the distributed control architecture. The method 600 may be performed at each of the track section gateways. The method begins with receiving a shuttle trajectory message (602). The shuttle trajectory message provides the trajectory for a particular shuttle. The shuttle associated with the received trajectory may be travelling on the current track section, or it may be on a different track section. It is determined if the shuttle associated with the trajectory is controlled by the current section gateway (604). The determination may be made in various ways. For example, the trajectory may specify a unique ID of the shuttle and the section gateway may track the shuttle IDs of shuttles currently controlled by the section gateway. Additionally or alternatively, the trajectory may identify the track section or section gateway that the shuttle is currently controlled by. Additionally or alternatively, the shuttle trajectory may specify the track location of the shuttle, and the section gateway can determine if the track location is part of the track section of the current section gateway. Regardless of how it is determined if the shuttle trajectory is for a shuttle controlled by the gateway, for those shuttle trajectories of shuttles not controlled by the current section gateway (No at 604) the shuttle trajectory can be passed on to the next section gateway (606) and another shuttle trajectory received (602). It is noted that it is possible for the section gateway to pass all shuttle trajectory messages on to the next gateway without checking whether or not the trajectory is for a shuttle controlled by the current section gateway. If the shuttle trajectory is for a shuttle controlled by the current section gateway (Yes at 604), the section gateway uses the trajectory to determine the drive current setpoints of the coils (608) that will result in the desired shuttle trajectory and then applies the current setpoints to the coils (610). The coil currents are repeatedly determined and applied until the end of the trajectory. As depicted in FIG. 6, determining the coil current setpoints may use the feedback of the shuttles determined position (612) from the position sensors which can be compared to expected position determined from the shuttle's trajectory (614). The drive current setpoints for the coils can then be determined (616) using the shuttle trajectory and the feedback of the position error. It will be appreciated that determining the drive current setpoints for the coils based on the received shuttle trajectory can be done using various feedback techniques, such as using a PID (proportional, integral, derivative) technique. Alternatively, the drive currents can be determined without the use of feedback.

The central controller may define an overall shuttle trajectory which may be done using an arbitrary formula that takes into account various factors. The gateways receive shuttle trajectories and evaluate a short segment of the trajectory, which may be for example on the order of 1 millisecond. The track section gateways may use a simplified and consistent formula for repeatedly evaluating the trajectory to specify the expected position of the shuttle at a time t. For example, the simplest possible implementation would use an initial position and velocity values for the shuttle. The initial position is intended to occur at a specific time, and as such the control components need to be tightly synchronized. Then at any time t after the initial position the setpoint position at time t is equal to the initial position + the velocity times t. The setpoint position may be used, along with any determined position errors, to determine the coil currents that will move the shuttle to the setpoint position in time t.

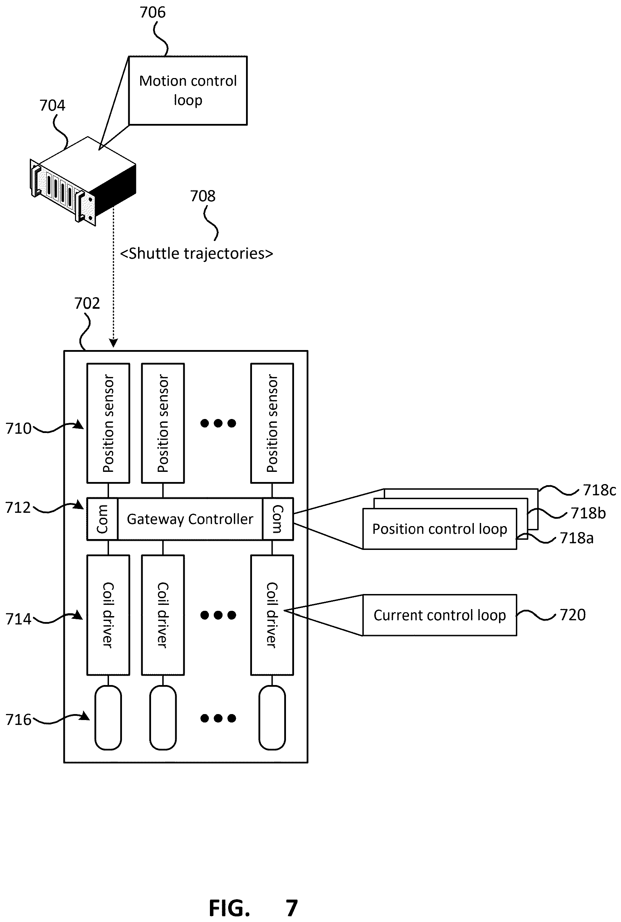

FIG. 7 depicts details of a further track section gateway. The section gateway 702 is similar to the gateway described above. A central controller 704 is configured to provide a motion control loop 706 which continually determines the trajectories of the shuttles travelling on the track. Since the control loop of the motion controller only determines the shuttle trajectories, instead of for example determining the coil current for each coil, the control loop may have more computing resources and as such may be able to determine trajectories for more shuttles, and/or compute the trajectories more frequently, and/or improve the trajectories, for example by optimizing the shuttle trajectories. The central controller repeatedly sends the determined shuttle trajectories 708 to the section gateway 702. The section gateway receives the trajectories and controls the shuttles accordingly. The section gateway is similar to the section gateways described above and comprises a plurality of position sensor 710, a gateway controller 712 and communication interfaces. The section gateway further includes a plurality of coil drivers 714 and coils 716.

As depicted in FIG. 7, the gateway controller 712 provides position control loops 718a, 718b, 718c (referred to collectively as position control loops 718). The gateway controller provides a position control loop for each shuttle travelling on the track section. That is, each position control loop is associated with a respective shuttle on the track. Each position control loop determines the driving current setpoints for the coils based on the shuttle trajectory. The position control loop continually adjusts the driving current setpoints for the coils in order to match the shuttle's motion to the received trajectory. The driving current setpoints of each coil determined by the position control loop are passed to the respective coil drivers. Each coil driver is configured to provide a current control loop 720 for each coil that is driven by the coil driver. As depicted in FIG. 7, each coil driver drives a single coil and as such each coil driver provides a single current control loop. Each current control loop receives the drive current setpoint and continually controls the current driving the coil to ensure that the actual driving current is as close to the desired driving current setpoint. The actual current can vary based on various factors, including for example the temperature of the coil, and as such the current control loop ensures that the supplied current matches the indicated setpoint.

The separation of the shuttle control into the motion control loop, the position control loops and the current control loops can improve the control of the shuttles as the control loops can run at higher frequencies. Further, with the position control loop arranged at the track section, the latency between the position control and the coil current control is extremely low. The current control loop may run at the highest frequency, with the motion control loop running at the lowest frequency while the position control loops can run at a frequency between the two

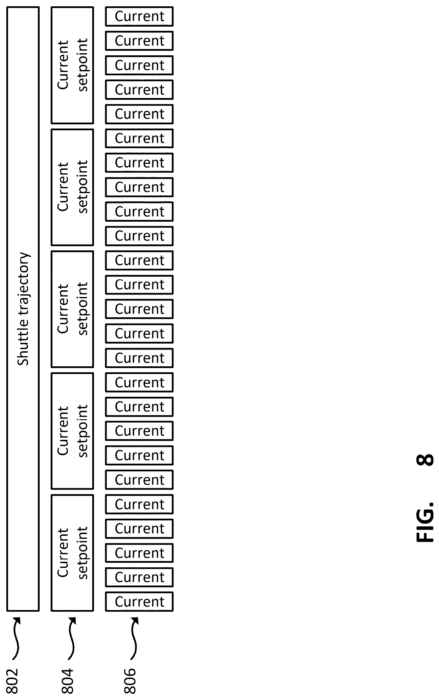

FIG. 8 depicts the shuttle control process performed by the distributed control architecture. FIG. 8 depicts the determination of a single shuttle trajectory 802 that is determined by the motion control loop. For each shuttle trajectory, the position control loop repeatedly determines the current setpoints 804 for the coils. The current setpoints are provided to the coil driver and the current control loop repeatedly controls the current 806 supplied to the coils. As depicted in FIG. 8, the position control loop that determines the current setpoints for a trajectory operates at 5 times the frequency of the motion control loop determining the shuttle trajectory. Similarly, the current control loop operates at 5 times the frequency of the position control loop. Accordingly, the position control loop can adjust the current setpoint 5 times for each received trajectory. Similarly, for each current setpoint, the control loop can adjust the current 5 times, resulting in the current control loop adjusting the current supplied to the coil 25 times for each trajectory.

It will be appreciated that the relative frequencies of the motion control loop, the position control loops and the current control loops depicted in FIG. 8 are only illustrative and the actual frequencies that the control loops operate at can vary. Further, the control loops do not need to operate at fixed ratios relative to each other. Each of the loops are able to operate at their respective frequencies without concern of the other loop frequencies. By running the control loops at higher frequencies, it is possible to more tightly control the motion of the shuttles. This may be particularly beneficial for lighter payloads as the acceleration and speeds of the shuttles may be higher and as such more frequent control adjustments are beneficial.

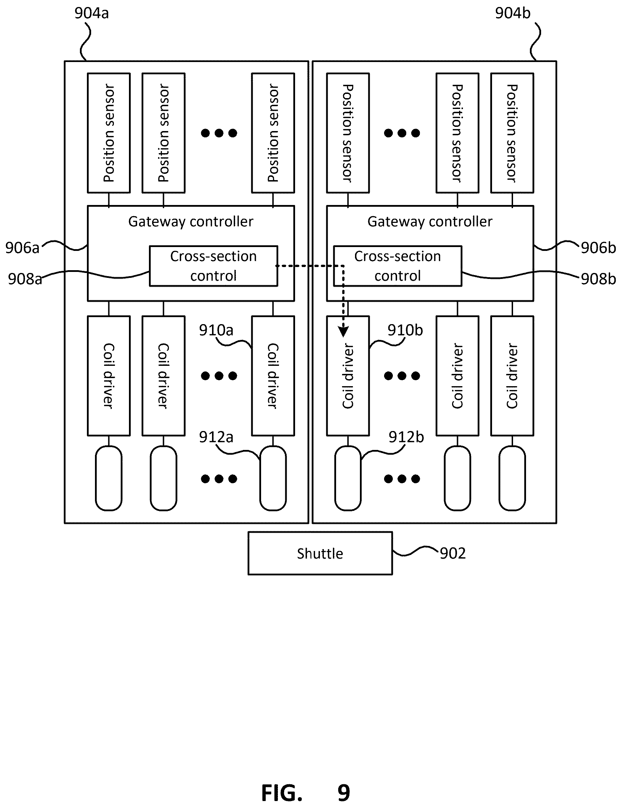

FIG. 9 depicts cross-section control of a shuttle. The above has described the control of a shuttle travelling along a section of track. As depicted in FIG. 9, as a shuttle 902 travels from one track section 904a to another 904b, it will span the two track sections and may be interacting with the coils on both track sections. While it is possible for the two different track sections 904a, 904b to control the coils interacting with the single shuttle 902, it may be desirable to have a single controller responsible for controlling the coils interacting with the shuttle, even if the coils are on different track sections.

As depicted, each of the gateway controllers 906a, 906b include cross-section control functionality 908a, 908b (referred to collectively as cross-section control functionality 908). The cross-section control functionality 908 allows one gateway controller, such as controller 906a to not only control the coil driver 910a and coil 912a on the same track section, but also allows the gateway controller 906a to control the coil driver 910b and coil 912b on the adjacent track section 904b.

In order to control the coils on an adjacent track section, one of the section gateways is identified as the primary gateway and the other section gateway is identified as the secondary gateway. The primary gateway may be identified by the central controller and identified in the shuttle trajectories. The primary gateway determines the coil control of the coils, including those on the adjacent track section, and rather than sending the coil control to the coil driver on the same track section, the coil control is sent to the gateway controller 906b on the adjacent section gateway 904b. The cross-section control functionality receives the coil control from the adjacent track section and controls the coils accordingly. The section gateway that acts as the primary or secondary may change as the shuttle progresses from one track section to the other. For example, as the shuttle initially transitions to the adjacent track section, the first track section may act as the primary gateway until more than half of the shuttle has moved to the adjacent track section, at which point the primary and secondary gateways can be flipped. Hysteresis can be applied to determining the primary/secondary gateways so that if the shuttle is oscillating at the cross point, the primary/secondary gateways are not constantly flipped.

The coil control communicated from the primary to the secondary section gateway may vary. For example, the primary gateway may determine the coil current setpoints for the coils controlled by the secondary gateway and transmit the coil current setpoints to the secondary gateway, which can then provide the coil current setpoints to the appropriate coil driver. Additionally, or alternatively, the primary gateway may determine shuttle position and propulsion force values for the shuttle and transmit these values to the secondary gateway, which may then determine and apply the coil current setpoints. This may be particularly useful if the electromagnetic characteristics of the secondary track section differ from those of the primary track section.

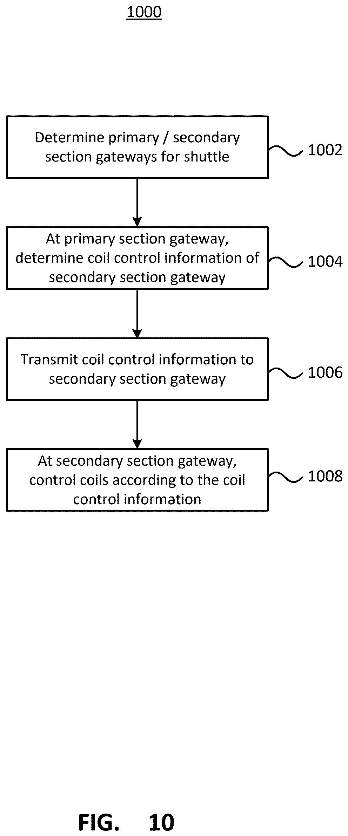

FIG. 10 depicts a method of cross-section control of a shuttle. The method 1000 determines a primary section gateway and a secondary section gateway for a shuttle that is passing over both track sections (1002). The determination of the primary and secondary gateways may be done at the central controller and communicated to the gateways with the trajectory information. Alternatively, the gateways may determine the primary/secondary gateways, for example based on an amount of the shuttle present on each track section. For example, if more of the shuttle is located on the first track section, the section gateway of the first track section can be determined as the primary gateway. With the primary/secondary gateways determined, the primary gateway determines coil control information for one or more coils on the secondary track section (1004). The coil control information may be the driving current setpoints for the coils, or may be motion information, such as the shuttle position and propulsion forces, which can be used to determine the driving current setpoints for the coils. The coil control information may include timestamps to ensure that the coils of the second track section are being controlled according to the primary section gateway at the appropriate time. The coil control information is transmitted from the primary gateway to the secondary gateway (1006). The secondary section gateway receives the coil control information and controls the coils according to the received information (1008). If the coil control information specifies the driving current setpoints, the current setpoints can be provided to the current drivers. Alternatively, if the coil control information specifies other information, such as the shuttle location and propulsion forces, the information is used to determine the driving current setpoints, which can then be applied to the coil drivers.

It will be appreciated by one of ordinary skill in the art that the system and components shown in FIGs. 1 - 10 may include components and/or steps not shown in the drawings. For simplicity and clarity of the illustration, elements in the figures are not necessarily to scale, are only schematic and are non-limiting of the elements structures. It will be apparent to persons skilled in the art that a number of variations and modifications can be made without departing from the scope of the invention as defined in the claims.

Although certain components and steps have been described, it is contemplated that individually described components, as well as steps, may be combined together into fewer components or steps or the steps may be performed sequentially, non-sequentially or concurrently. Further, although described above as occurring in a particular order, one of ordinary skill in the art having regard to the current teachings will appreciate that the particular order of certain steps relative to other steps may be changed. Similarly, individual components or steps may be provided by a plurality of components or steps. One of ordinary skill in the art having regard to the current teachings will appreciate that the components and processes described herein may be provided by various combinations of software, firmware and/or hardware, other than the specific implementations described herein as illustrative examples.

The techniques of various embodiments may be implemented using software, hardware and/or a combination of software and hardware. Various embodiments are directed to apparatus, e.g. a node which may be used in a communications system or data storage system. Various embodiments are also directed to non-transitory machine, e.g., computer, readable medium, e.g., ROM, RAM, CDs, hard discs, etc., which include machine readable instructions for controlling a machine, e.g., processor to implement one, more or all of the steps of the described method or methods.

Some embodiments are directed to a computer program product comprising a computer-readable medium comprising code for causing a computer, or multiple computers, to implement various functions, steps, acts and/or operations, e.g. one or more or all of the steps described above. Depending on the embodiment, the computer program product can, and sometimes does, include different code for each step to be performed. Thus, the computer program product may, and sometimes does, include code for each individual step of a method, e.g., a method of operating a communications device, e.g., a wireless terminal or node. The code may be in the form of machine, e.g., computer, executable instructions stored on a computer-readable medium such as a RAM (Random Access Memory), ROM (Read Only Memory) or other type of storage device. In addition to being directed to a computer program product, some embodiments are directed to a processor configured to implement one or more of the various functions, steps, acts and/or operations of one or more methods described above. Accordingly, some embodiments are directed to a processor, e.g., CPU, configured to implement some or all of the steps of the method(s) described herein. The processor may be for use in, e.g., a communications device or other device described in the present application.

Numerous additional variations on the methods and apparatus of the various embodiments described above will be apparent to those skilled in the art in view of the above description. Such variations are to be considered within the scope of the current disclosure.

## Claims

1. A linear motor conveyor system comprising:
a plurality of shuttles;
a track on which the plurality of shuttles move, the track comprising a plurality of connected track sections, each track section comprising:
a plurality of linear motor coils;
a plurality of coil drivers, each of the coil drivers driving one or more respective coils of the plurality of linear motor coils;
a plurality of position sensors for determining respective positions of shuttles on the respective track section;
first and second network communication interfaces; and
a section gateway controller configured to:
receive shuttle trajectories over the first communication interface and transmit shuttle trajectories over the second communication interface; and
controlling one or more coil drivers to achieve the shuttle trajectories; and
a central controller communicatively coupled to a first network communication interface of one of the section gateway controllers (the first section gateway controller), the central controller configured to:
determine shuttle trajectories of the plurality of shuttles; and
transmit the determined shuttle trajectories to the first network communication interface of the first section gateway controller.

2. The conveyor system of claim 1, wherein the central controller is further configured to transmit a time synchronization signal to the first network communication interface of the first section gateway controller.

3. The conveyor system of claim 2, wherein each of the section gateway controllers are further configured to:
receive a time synchronization signal over the first communication interface;
synchronize an internal clock to the received time synchronization signal;
adjust the time synchronization signal; and
transmit the adjusted time synchronization signal over the second communication interface.

4. The conveyor system of claim 3, wherein adjusting the time synchronization signal comprises:
estimating a length of time between receiving the time synchronization signal and transmitting the adjusted time synchronization signal; and
adjusting the received time synchronization signal to account for the estimated length of time.

5. The conveyor system of claim 4, wherein estimating the length of time further comprises:
determining a message queue length; and
accounting for an additional length of time the time synchronization message or the adjusted time synchronization message spends in the message queue based on the message queue length.

6. The conveyor system of any one of claims 1 to 5, wherein each section gateway controller is further configured to:
provide a position control loop for each shuttle travelling on the respective section, the position control loop continually determining current set points for coils to match shuttle position to the shuttle trajectory.

7. The conveyor system of claim 6, wherein each section gateway controller is further configured to:
transmit the current set points of coils to the respective coil drivers, and
wherein each of the coil drivers comprises a current control loop for each coil associated with the coil driver, the current control loop matching the actual coil current of each coil to the current set point.

8. The conveyor system of any one of claims 1 to 7, wherein the shuttle trajectory information defines a motion profile of a respective shuttle over a period of time.

9. The conveyor system of any one of claims 1 to 8, wherein the shuttle trajectory information for a respective shuttle identifies a specific section gateway controller responsible for determining position information of the respective shuttle.

10. The conveyor system of any one of claims 1 to 8, wherein each of the section gateway controllers are configured to identify if the respective section gateway controller is responsible for determining position information of a respective shuttle associated with received shuttle trajectory information.

11. The conveyor system of claim 9 or 10, wherein the section gateway controller responsible for determining position information of a shuttle travelling over two adjacent track sections controls one or more coil drivers of the adjacent track section.

12. The conveyor system of claim 11, wherein each of the section gateway controllers are further configured to:
transmit coil current set points to a section gateway controller of a first adjacent track section;
receive coil current set points from a section gateway controller of a second adjacent track section; and
control coil current according to the received coil current set points.

13. The conveyor system of claim 11, wherein each of the section gateway controllers are further configured to:
transmit positioning information to a section gateway controller of a first adjacent track section;
receive positioning information from a section gateway controller of a second adjacent track section; and
determine coil current set points based on the received positioning information; and
control coil current according to the determined coil current set points.

14. The conveyor system of any one of claims 1 to 12, wherein the first and second network communication interfaces comprise optical network communication interfaces providing an optical network.

15. The conveyor system of claim 14, wherein the optical network carries messages of different priorities, wherein messages carrying shuttle trajectories and time synchronization signals are a highest priority and wherein the messages further include one or more of:
status information;
sensor data; and
shuttle position data.
